# EUROPÄISCHE PATENTANMELDUNG

(11) **EP 1 897 730 A2**
(43) Veröffentlichungstag der Anmeldung: **12.03.2008**
(21) Anmeldenummer: 07015449.7
(22) Anmeldetag: 07.08.2007
(51) Int. Cl.: B60J 7/12

(54) **Verdeck für ein Cabriolet**

(30) Priorität: 08.09.2006 DE 102006042263
(71) Anmelder: Dr.Ing. h.c. F. Porsche Aktiengesellschaft, 70435 Stuttgart (DE)
(72) Erfinder: Fröschle, Mathias, 73760 Ostfildern (DE); Liebhardt, Randolf, 71120 Grafenau (DE)

(57) **Zusammenfassung**

Die Erfindung betrifft ein Verdeck (1) für ein Cabriolet, mit einem Verdeckgestell (3), das zumindest ein Hauptgestänge (4) sowie jeweils einen seitlichen Dachrahmen (8) aufweist, der einen vorderen, ersten Dachrahmenabschnitt (11) und einen zweiten Dachrahmenabschnitt (7) aufweist, der zumindest abschnittweise als ein zweiteiliger Dachrahmenabschnitt (7) mit einem inneren Gestellteil (21) und mit einem seitlich außen an dem inneren Gestellteil schwenkbar angelenkten Profilabschnitt (22) ausgeführt ist.

Um einen Schwenkantrieb (26) für den Profilabschnitt realisieren zu können, ist vorgesehen, dass der erste Dachrahmenabschnitt (11) über eine Verbindungslenkeranordnung (12) mit dem inneren Gestellteil (21) verbunden ist und dass zumindest ein Antriebslenker (27) für den schwenkbare Profilabschnitt (22) mit dem Profilabschnitt (22) und der Verbindungslenkeranordnung (12) oder dem vorderen Dachrahmen (10) verbunden ist.

## Beschreibung

Bei der Erfindung wird ausgegangen von einem Verdeck für ein Cabriolet, gemäß Oberbegriff des Patentanspruchs 1.

Die DE 199 62 995 A1 beschreibt ein gattungsbildendes Verdeck für ein Cabriolet. Es umfasst ein Verdeckgestell, das ein mit einem Verdecklager verbindbares Hauptgestänge sowie jeweils einen seitlichen Dachrahmen mit einem vorderen Dachrahmenabschnitt aufweist. Zumindest ein weiterer Dachrahmenabschnitt jedes Dachrahmens ist zweiteilig ausgeführt und weist ein inneres Gestellteil und einen seitlich außen an dem inneren Gestellteil angelenkten Profilabschnitt auf. Der bewegliche Profilabschnitt ist über eine etwa in Fahrzeughochrichtung verlaufende Schwenkachse an dem inneren Gestellteil angebunden. Über eine Lenkerstange ist der Profilabschnitt mit dem Hauptgestänge verbunden, so dass bei einer Ablagebewegung des Verdecks der Profilabschnitt um seine hintere Schwenkachse nach außen geschwenkt wird. Bei der umgekehrten Bewegungsrichtung des Verdecks bewegt die Lenkerstange den Profilabschnitt wieder in Richtung des inneren Gestellteils.

Aufgabe der Erfindung ist es, ein Verdeck der eingangs genannten Art anzugeben, beim dem ein Antrieb für das Profilteil mit geringem Aufwand bereitgestellt werden kann.

Gelöst wird diese Aufgabe mit einem Verdeck, das die in Anspruch 1 genannten Merkmale aufweist. Ausführungsbeispiele sind Gegenstand der Unteransprüche.

Die mit der Erfindung hauptsächlich erzielten Vorteile sind darin zu sehen, dass der Antrieb für den Profilabschnitt lediglich mit einem Antriebslenker aus der Bewegung des vorderen Dachrahmens bzw. dessen Verbindungslenkeranordnung an den schwenkbaren Profilabschnitt geleitet werden kann, da die Verbindungslenkeranordnung benachbart zum zweiten Dachrahmenabschnitt angeordnet ist. Für den Antrieb kann somit die Relativbewegung der beiden Dachrahmenabschnitte zueinander beim Bewegen des Verdecks genutzt werden.

Nach einem bevorzugten Ausführungsbeispiel entsprechend Anspruch 3, nach dem ein Viergelenk als Verbindungslenkeranordnung vorgesehen ist, findet zwischen den beiden Dachrahmenabschnitten beim Bewegen des Verdeck ein relativer Hub statt, der ohne weiteres in eine Schwenkbewegung für den Profilabschnitt umgesetzt werden kann.

Die Erfindung wird nachfolgend anhand von Ausführungsbeispielen mit Bezug auf die Zeichnung näher erläutert. Es zeigen:
- Fig. 1: ausschnittweise in Seitenansicht ein Verdeck in einer Teilöffnungsstellung und
- Fig. 2: eine vergrößerte Detaildarstellung eines Dachrahmens des Verdecks in einer Perspektive.

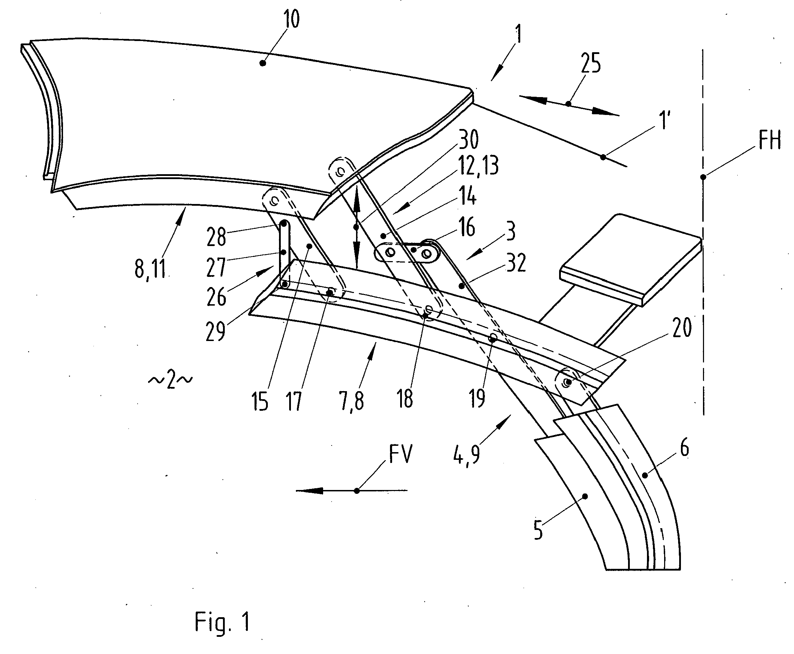

In Fig. 1 ist der grundsätzliche Aufbau eines Verdecks 1 für ein nicht dargestelltes Cabriolet gezeigt. Das Verdeck 1 ist an einem nicht gezeigten Verdecklager beweglich derart angelenkt, dass es aus einer nicht gezeigten Schließstellung, in der es einen Fahrgastraum 2 überspannt, in eine heckseitige, ebenfalls nicht gezeigte Ablagestellung bewegt werden kann. Das Verdeck 1 mit einem Verdeckbezug 1' besitzt ein Verdeckgestell 3 mit mehreren Gestellteilen, von denen ein Hauptgestänge 4 mit dem Verdecklager verbunden ist. Das Hauptgestänge 4 weist zumindest zwei Lenker, hier einen so genannten Dachlenker 5 und einen Hauptlenker 6, auf, die zusammen mit einem seitlichen Dachrahmenabschnitt 7 eines seitlichen Dachrahmens 8 ein Hauptviergelenk 9 bilden. An den Dachrahmenabschnitt 7 schließt sich ein vorderes bzw. erstes Dachteil 10 mit einem vorderen Dachrahmenabschnitt 11 des Verdecks 1 an, welches über eine Verbindungslenkeranordnung 12 mit dem dahinter liegenden, also zweiten Dachrahmenabschnitt 8 verbunden ist. Die Verbindungslenkeranordnung 12 bildet vorzugsweise ein zweites Viergelenk 13 des Verdeckgestells 3 und umfasst einen vorderen und hinteren Steuerlenker 14 und 15, die jeweils schwenkbeweglich mit dem vorderen Dachteil 10 und dem zweiten Dachrahmenabschnitt 7 verbunden sind. In die Kinematik des Verdeckgestells 3 eingekoppelt ist das vordere Dachteil 10 über einen Koppellenker 16, der das Hauptgestänge 4 und die Verbindungslenkeranordnung 12 miteinander koppelt. Am zweiten Dachrahmenabschnitt 7 befinden sich demnach vier Schwenklager 17, 18, 19 und 20 des Verdeckgestells 3, so dass dort eine hohe Anzahl sich gegeneinander bewegender Gestellteile angebunden ist.

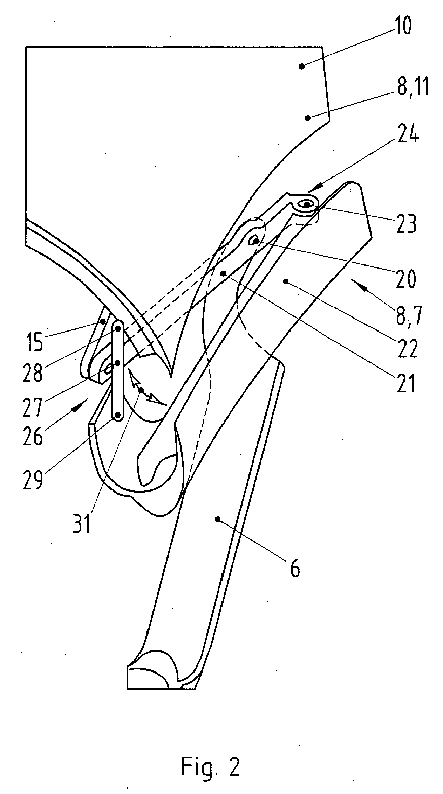

Der zweite Dachrahmenabschnitt ist, wie Fig. 2 zeigt, zweiteilig mit einem inneren Gestellteil 21 und einem äußeren Profilabschnitt 22 (Dichtungsstrang) ausgeführt. An dem inneren Gestellteil 21 liegen die vier Schwenkachsen 17 bis 20, was allerdings in Fig. 2 nicht dargestellt ist. Der Profilabschnitt 22 ist an dem Gestellteil 21 schwenkbeweglich angelenkt, wofür eine etwa in Fahrzeughochrichtung FH (Fig. 1) verlaufende Schwenkachse 23 vorgesehen ist, die - bezüglich einer Vorwärtsfahrtrichtung FV - am hinteren Ende 24 des Gestellteils 21 angebracht ist. Damit ist der Profilabschnitt 22 schwenkbeweglich nach außen von dem Gestellteil 21 weg verlagerbar, wenn das Verdeck 1 von seiner Schließstellung in die Ablagestellung bewegt wird, und er wird wieder in Richtung des Gestellteils 21 verschwenkt, wenn das Verdeck 1 von der Ablagestellung in Schließstellung bewegt wird.

Für die Schwenkbewegung des Profilabschnitts 22 während der Verdeckbewegung (Doppelpfeil 25) ist ein Antrieb 26 vorgesehen, der von zumindest einem Antriebslenker 27 gebildet wird. Der Antriebslenker 27 ist an den Profilabschnitt 22 mit seinem einen Ende 28 angebunden. Mit seinem anderen Ende 29 ist er mit dem vorderen Dachteil 10 oder der Verbindungslenkeranordnung 12, insbesondere mit einem der Steuerlenker 14 oder 15, verbunden. Die Anzahl der verwendeten Antriebslenker und/oder deren/dessen Art der Anbindung an den Profilabschnitt 22 wird so gewählt, dass eine zwischen den beiden Anbindungsstellen (Ende 28 und 29) stattfindende Hubbewegung (Doppelpfeil 30) im Verdeckgestell 3 in die gewünschte Schwenkbewegung (Doppelpfeil 31) für den Profilabschnitt 22 umgesetzt wird.

Die Bewegungsübertragung zwischen Hauptgestänge 4 und Verbindungslenkeranordnung 12 erfolgt über den in das Verdeckgestell 3 eingebundenen Koppellenker 16, der das Hauptgestänge 4 mit der Verbindungslenkeranordnung 12 koppelt. Im gezeigten Ausführungsbeispiel ist ein Lenker 5 oder 6, hier der Dachlenker 6, mit einem Fortsatz 32 ausgestattet, der den zweiten Dachrahmenabschnitt 7 überragt und der an seinem Ende mit dem Koppellenker 16 verbunden ist, wobei letzterer auch mit einem der Steuerlenker 14 oder 15 verbunden ist.

## Patentansprüche

1. Verdeck (1) für ein Cabriolet, mit einem Verdeckgestell (3), das zumindest ein Hauptgestänge (4) sowie jeweils einen seitlichen Dachrahmen (8) aufweist, der einen vorderen, ersten Dachrahmenabschnitt (11) und einen zweiten Dachrahmenabschnitt (7) aufweist, der zumindest abschnittweise als ein zweiteiliger Dachrahmenabschnitt (7) mit einem inneren Gestellteil (21) und mit einem seitlich außen an dem inneren Gestellteil schwenkbar angelenkten Profilabschnitt (22) ausgeführt ist, **dadurch gekennzeichnet, dass** der erste Dachrahmenabschnitt (11) über eine Verbindungslenkeranordnung (12) mit dem inneren Gestellteil (21) verbunden ist und dass zumindest ein Antriebslenker (27) für den schwenkbare Profilabschnitt (22) mit dem Profilabschnitt (22) und der Verbindungslenkeranordnung (12) oder dem vorderen Dachrahmen (10) verbunden ist.

2. Verdeck nach Anspruch 1, **dadurch gekennzeichnet, dass** das innere Gestellteil (21) an dem Hauptgestänge (4) angebunden ist und dass zwischen dem Hauptgestänge (4) und der Verbindungslenkeranordnung (12) ein Koppellenker (16) in das Verdeckgestell (3) eingebunden ist.

3. Verdeck nach Anspruch 1 oder 2, **dadurch gekennzeichnet, dass** die Verbindungslenkeranordnung (12) als Viergelenk (13) ausgebildet ist und dass der Antriebslenker (32) mit einem Steuerlenker (14, 15) des Viergelenks (13) verbunden ist.
